# EUROPÄISCHE PATENTSCHRIFT

(11) **EP 2 162 613 B1**
(45) Veröffentlichungstag und Bekanntmachung des Hinweises auf die Patenterteilung: **15.08.2018**
(21) Anmeldenummer: 08773443.0
(22) Anmeldetag: 14.06.2008
(51) Int. Cl.: F02F 3/00, F02F 3/22, F16J 1/16

(54) **KOLBEN EINER BRENNKFRAFTMASCHINE MIT EINER ERHÖHTEN SCHRÄGSTELLUNG DER KASTENWÄNDE DES KOLBENS**
PISTON OF AN INTERNAL COMBUSTION ENGINE WITH AN INCREASED INCLINATION OF THE BOX WALLS OF THE PISTON
PISTON POUR MOTEUR À COMBUSTION INTERNE, PRÉSENTANT DES PAROIS À OBLIQUITÉ ACCRUE

(30) Priorität: 06.07.2007 DE 102007031581
(43) Veröffentlichungstag der Anmeldung: 17.03.2010
(73) Patentinhaber: KS Kolbenschmidt GmbH, 74172 Neckarsulm (DE)
(72) Erfinder: BLAU, Alfred, Alexander, 74172 Neckarsulm (DE); BUSCHBECK, Ralf, 74861 Neudenau (DE); FAHR, Matthias, 74177 Bad Friedrichshall (DE)
(74) Vertreter: Greif, Thomas
(86) Internationale Anmeldenummer: PCT/EP2008/004806
(87) Internationale Veröffentlichungsnummer: WO 2009/006978

(56) Entgegenhaltungen:
- EP-A- 0 430 362
- EP-A- 0 838 587
- EP-A- 0 877 160
- WO-A-2005/078321
- DE-A1- 10 142 980
- DE-A1- 10 145 589
- JP-A- 2002 317 691

## Beschreibung

Die Erfindung betrifft einen Kolben einer Brennkraftmaschine, der einen Kolbenboden mit Ringnuten sowie ein an dem Kolbenboden angeordnetes Schaftteil aufweist, wobei das Schaftteil tragende Schaftwandabschnitte aufweist und die tragenden Schaftwandabschnitte über gegenüber dem Kolbenaußendurchmesser zurückliegende schräg gestellte Verbindungswände miteinander verbunden sind, wobei weiterhin in den Verbindungswänden Bolzennaben zur Aufnahme eines Kolbenbolzens angeordnet sind, gemäß den Merkmalen des Oberbegriffes des Patentanspruches 1.

Ein gattungsgemäßer Kolben ist aus der EP 0 838 587 bekannt. Weiterhin ist aus der DE 101 45 589 B4 ein Kolben bekannt. Allerdings hat sich herausgestellt, dass trotz dieser verbesserten Parameter ein solcher Kolben hinsichtlich seines Betriebes im Zylinderraum der Brennkraftmaschine einer weiteren Verbesserung bedarf. Diese Verbesserung ist notwendig geworden aufgrund der immer weiter steigenden Anforderungen an den Betrieb einer Brennkraftmaschine, insbesondere für Fahrzeuge, im Hinblick auf deren Umweltverträglichkeit (insbesondere Verbrauch und Schadstoffausstoß, die beide minimiert werden sollen) und auch auf die Dauerhaltbarkeit und Geräuschentwicklung.

Der Erfindung liegt daher die Aufgabe zugrunde, einen gattungsgemäßen Kolben dahingehend zu verbessern, dass seine Parameter im Betrieb in der Brennkraftmaschine, vor allen Dingen seine Dauerfestigkeit und Geräuschentwicklung, verbessert werden und durch seinen Einsatz in der Brennkraftmaschine deren Parameter wiederum ebenfalls insbesondere hinsichtlich von Verbrauch und Schadstoffausstoß verbessert werden.

Diese Aufgabe ist durch die Merkmale des Patentanspruches 1 gelöst.

Nach der Erfindung ist ausgehend davon, dass die zurückliegenden und schräg gestellten Verbindungswände derart schräg gestellt sind (Schrägstellung in Bezug auf eine durch die Kolbenhubachse verlaufende Ebene), dass sie im Verlauf von ihrer Unterkante über einen demgegenüber weiter zurückliegenden Zwischenbereich in ihrem demgegenüber weiter zurückliegenden Endbereich bündig in einen Nabenabstützungsbereich unterhalb des Kolbenbodens übergehen, erfindungsgemäß vorgesehen, dass die Dicke des Kolbenbodens aus Richtung einer Kolbenhubachse nach außen verlaufend abnimmt. In Kombination mit der Krümmung, insbesondere einer konvexen oder konkaven Krümmung, der Kastenwände des Kolbens in der horizontalen Schnittebene unterhalb des Kolbenbodens (auch Bodenplatte genannt) und insbesondere in Kombination mit einer gewölbten Nabenstirnfläche lassen sich in vorteilhafter Weise die inneren Spannungen in dem Kolben weiter reduzieren.

Durch diesen Verlauf der Kastenwände, betrachtet von unten nach oben, bezogen auf eine durch die Kolbenhubachse verlaufende Ebene, wird die Schrägstellung der Verbindungswände (auch Kastenschrägstellung genannt) deutlich erhöht, sodass die Verbindungswand (= Kastenwand) und die Nabenabstützung im oberen Bereich der Nabenabstützung zumindest weitestgehend, insbesondere vollständig bündig sind. Dadurch werden Spannungen am Kolbenboden deutlich reduziert, was zu einer Dauerfestigkeitserhöhung führt. Außerdem lässt sich dadurch das Gewicht des Kolbens weiter reduzieren, woraus in positiver Weise eine Geräuschreduzierung resultiert.

Durch die erfindungsgemäße konstruktive Ausgestaltung des Kolbens verbessert sich die "Load capability" wesentlich, d. h., dass der Kolben hinsichtlich seiner
dauerhaften Widerstandsfähigkeit in Bezug auf thermische bzw. mechanische Last verbessert ist, d. h., dass aufgrund der heutigen Anforderungen an Brennkraftmaschinen der Kolben diesen Anforderungen wesentlich besser gewachsen ist und dementsprechend mehr aushält.

In Weiterbildung der Erfindung sind in einem Kolbeninnenbereich keine Hinterschnitte vorhanden. Dass heißt, dass mit der Erfindung Hinterschnitte an der Kolbeninnenform vermieden werden. Daraus resultiert in vorteilhafter Weise gegenüber bekannten Kolben eine einfachere Gieswerkzeuggestaltung. Außerdem ermöglicht die Vermeidung von Hinterschnitten eine intensivierte Gieswerkzeugkühlung, woraus eine erhöhte Nabenbelastbarkeit des Kolbens im Betrieb in der Brennkraftmaschine resultiert. Außerdem resultieren aus der einfacheren Gieswerkzeuggestaltung Kostenreduzierungen.

In Weiterbildung der Erfindung sind die tragenden Schaftwandabschnitte in Bezug auf eine Bolzenachse derart asymmetrisch ausgebildet, dass der eine Schaftwandabschnitt in einem radialen Verlauf später in die zurückliegende Verbindungswand übergeht als der ihm gegenüber liegende Schaftwandabschnitt. Das bedeutet, dass bei dem erfindungsgemäßen Kolben asymmetrische Schaftumschlingungswinkel vorgesehen sind. Diese asymmetrischen Schaftumschlingungswinkel führen in vorteilhafter Weise zu einer Reduzierung von Reibung und Gewicht, sodass auch durch diese Maßnahme das Geräusch beim Betrieb des Kolbens in der Brennkraftmaschine deutlich reduziert wird.
In Weiterbildung der Erfindung nimmt die Dicke des Kolbenbodens aus Richtung einer Kobelhubachse nach außen verlaufend ab. Durch diese abnehmende Bodendicke in Richtung der Lauffläche kommt es ebenfalls ohne Stabilitätseinbußen des Kolbens zu einer Gewichtreduzierung und damit zu einer weiteren Geräuschreduzierung beim Betrieb des Kolbens in der Brennkraftmaschine.

In Weiterbindung der Erfindung ist hinter dem Ringfeld ein in den Kolbeninnenbereich reichender Freibereich vorgesehen, sodass dadurch ein vergrößerter Ringfeldumgusswinkel im Bereich der Gewichtstaschen gegeben ist. Durch diese Gestaltung kann der Wärmefluss im Ringfeldbereich optimiert und daraus resultierend die Kolbentemperatur abgesenkt werden. Dadurch kommt es zu einer verbesserten Dauerhaltbarkeit des Kolbens im Betrieb der Brennkraftmaschine. Außerdem sind dadurch erweiterte Freiheitsgrade für die Nutbewehrung gegeben.

In Weiterbildung der Erfindung beträgt die Neigung des Freibereiches größer 30° bezogen auf eine Achse parallel zu der Kolbenhubachse. Bisher war es bekannt, diese Neigung nicht größer als 30°, ebenfalls bezogen auf eine Achse parallel zu der Kolbenhubachse, auszuführen, da dies negative Auswirkungen auf die Festigkeit des Kolbens hatte bzw. Schwierigkeiten bei der Kolbenherstellung bereitete. In Verbindung mit dem konstruktiven Merkmal, dass nämlich die Verbindungswände derart schräg gestellt sind, dass sie im Verlauf von ihrer Unterkante über einen demgegenüber weiter zurückliegenden Zwischenbereich in ihrem demgegenüber weiter zurückliegenden Endbereich weitestgehend bündig in einen Nabenabstützungsbereich unterhalb des Kolbenbodens übergehen, läßt es sich jetzt auch herstellungstechnisch realisieren, dass die Neigung des Freibereiches größer 30° beträgt. Daraus resultiert im Übrigen auch, dass die Schrägstellung der Verbindungswände einen Winkel aufweist, der ebenfalls größer 30°, ebenfalls bezogen auf eine Achse parallel zu der Kolbenhubachse beträgt.

In Weiterbildung der Erfindung ist die Oberfläche des Kolbenschaftes, d. h. der tragenden Schaftwandabschnitte, in Richtung der Kolbenhubachse asymmetrisch, insbesondere asymmetrisch ballig ausgeführt. Dies hat den Vorteil, dass aufgrund der Asymmetrie des Kolbenschaftes, genauer der tragenden Schaftwandabschnitte, die sich am Zylinderinnenraum der Brennkraftmaschine im Betrieb des Kolbens abstützen, den Verformungen des Kolbens bei der Auf- und Abbewegung anpassen können, so dass dadurch die Reibungskräfte verringert werden. Durch die auf den Kolben im Betrieb in der Brennkraftmaschine wirkenden Kräfte (insbesondere durch die von unten durch das Pleuel und die Kurbelwelle wirkenden Kräfte und die von oben durch den Verbrennungsdruck wirkenden Kräfte und thermische Deformationen) kommt es zu Verformungen des Kolbens, so dass jetzt die asymmetrische Kolbenschaftform diese Verformungen auffängt und dazu führt, dass die aneinander liegenden Flächen (tragende Schaftwandabschnitte einerseits und Zylinderinnenfläche andererseits) nahezu vollständig oder sogar vollständig aneinander liegen, so dass die einander zugewandten Reibungsflächen vergleichmäßigt werden und nicht mehr wegen der Verformungen wie bisher ungleichmäßig aneinander liegen. Dadurch kommt es zu einer gleichmäßigen und damit verringerten Reibungswirkung zwischen den beteiligten Reibflächen. Durch das daraus resultierende asymmetrische Laufspiel des Kolbenschaftes in dem Zylinder der Brennkraftmaschine kommt es zu Reibungsreduzierungen, woraus Kraftstoffersparnisse resultieren, sowie zu optimierten Kolbensekundärbewegungen, die ebenfalls zu Geräuschreduzierungen führen.

Aufgrund der vorstehend genannten erfindungsgemäßen Maßnahmen, die einzeln oder in entsprechenden Kombinationen verwirklicht werden können, kann das Gewicht des Kolbens reduziert werden, die Nabenpressung kann erhöht werden, die Schaftreibung des Kolbens im Zylinder der Brennkraftmaschine kann reduziert werden, wobei es weiterhin zu Temperaturabsenkungen und Geräuschreduktionen beim Einsatz des Kolbens im Zylinder der Brennkraftmaschine kommt.

Ein Ausführungsbeispiel eines erfindungsgemäßen Kolbens, auf den die Erfindung jedoch nicht beschränkt ist, ist im Folgenden beschrieben und anhand der Figuren erläutert.

Es zeigen:
Figur 1: Längsschnitt durch einen erfindungsgemäßen Kolben,
Figur 2: Querschnitt durch einen erfindungsgemäßen Kolben,
Figur 3: einen weiteren Querschnitt durch einen erfindungsgemäßen Kolben,
Figur 4: einen weiteren Längsschnitt durch einen erfindungsgemäßen Kolben,
Figur 5: eine weitere, dreidimensionale Ansicht eines erfindungsgemäßen Kolbens.

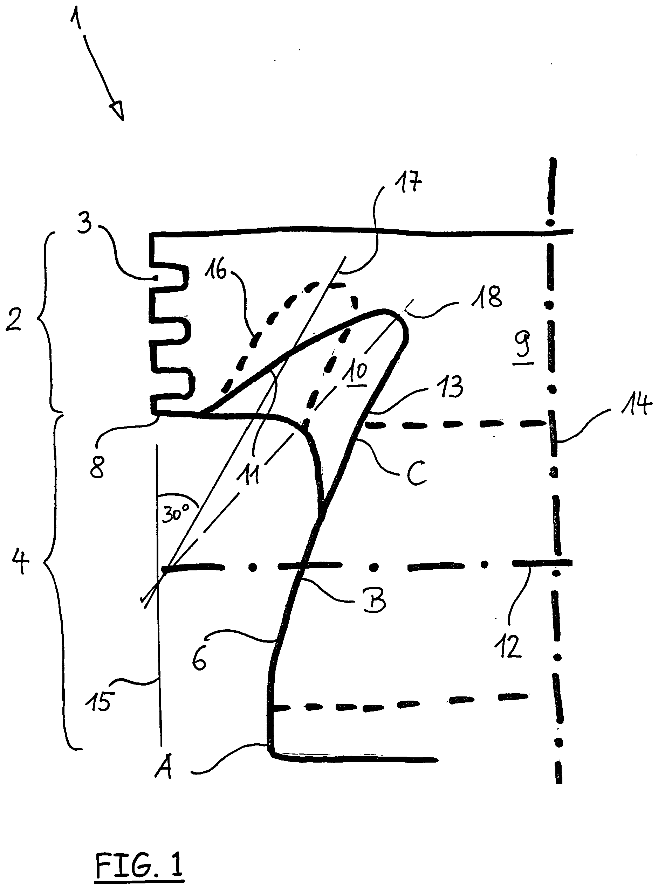

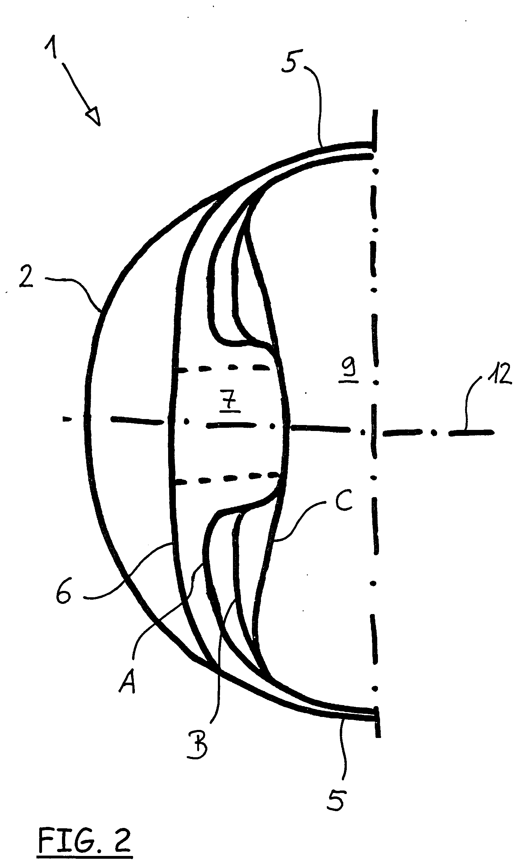

In den Figuren 1 und 2 ist in den jeweiligen Schnitten ein Kolben 1 einer Brennkraftmaschine dargestellt, der einen Kolbenboden 2 mit Ringnuten 3 sowie ein an dem Kolbenboden 2 angeordnetes Schaftteil 4 aufweist. Das Schaftteil 4 seinerseits weist tragende Schaftwandabschnitte 5 auf, wobei die tragenden Schaftwandabschnitte 5 über gegenüber dem Kolbenaußendurchmesser zurückliegende schräg gestellte Verbindungswände 6 miteinander verbunden sind, wobei weiterhin in den Verbindungswänden 6 Bolzennaben 7 zur Aufnahme eines nicht dargestellten Kolbenbolzens angeordnet sind. Der Aufbau des in den Figuren 1 und 2 gezeigten Kolbens 1 ist insoweit symmetrisch, als dass sich zwei tragende Schaftwandabschnitte 5 gegenüberliegen und zwischen den beiden gegenüberliegenden Schaftabschnitte die beiden sich ihrerseits gegenüberliegenden und gegenüber dem Kolbenaußendurchmesser zurückliegenden schräg gestellten Verbindungswände 6 befinden. Eine Unterkante 8 an der Unterseite des Kolbenbodens 2 geht in Richtung eines Kolbeninnenbereiches 9 über, wobei bei diesem Übergang ein Freibereich 10, der hinter dem Ringfeld liegt, vorgesehen ist und der seinerseits eine Begrenzungswand 11 aufweist. Mit der Bezugsziffer 12 ist eine Bolzenachse bezeichnet. Die Verbindungswände 6 sind derart schräg gestellt, dass sie im Verlauf von ihrer Unterkante A über einen dem gegenüber weiter zurückliegenden Zwischenbereich B in ihrem demgegenüber weiter zurückliegenden Endbereich C bündig in einen Nabenabstützungsbereich 13 unterhalb des Kolbenbodens 2 übergehen. Dabei ist bei diesem Ausführungsbeispiel der Freibereich 10 so gewählt, dass der Verlauf der Verbindungswand 6 von A bis C über den Nabenabstützungsbereich 13 in den Scheitelpunkt des Freibereiches 10 mündete und von dort über die Begrenzungswand 11 in Richtung der Unterkante 8 des Kolbenbodens 2 weiterläuft. Dieser Bereich und der Verlauf der Verbindungswände 6 ist gegenüber dem Kolbenaußendurchmesser zurückgesetzt und geht in die tragenden Schaftwandabschnitte 5 über, die in etwa dem Kolbenaußendurchmesser entsprechen, wobei diese Schaftwandabschnitte 5 den Kolben 1 im Zylinderraum der Brennkraftmaschine tragen, sodass sich der Kolben 1 über diese tragenden Schaftwandabschnitte 5 an den Zylinderlaufflächen der Brennkraftmaschine abstützen kann und dadurch geführt wird.

In Figur 1 ist unter anderem auch deutlich erkennbar, dass die Neigung des Freibereiches 10 größer 30° beträgt bezogen auf eine Achse 15 parallel zu der Kolbenhubachse 14. Bisher war es bekannt, diese Neigung nicht größer als 30°, ebenfalls bezogen auf eine Achse 15 parallel zu der Kolbenhubachse 14, auszuführen, da dies negative Auswirkungen auf die Festigkeit des Kolbens hatte bzw. Schwierigkeiten bei der Kolbenherstellung bereitete. Dies ist in Figur 1 durch einen bisherigen Freibereich 16 (getsrichelt dargestellt) und eine alte Achse 17 kenntlich gemacht. Diese Achse 17, die durch den alten Freibereich 16 läuft und quasi dessen Längsachse darstellt, war bisher um nicht mehr als 30° zu der Achse 15 geneigt. In Verbindung mit dem konstruktiven Merkmal, dass nämlich die Verbindungswände 6 derart schräg gestellt sind, dass sie im Verlauf von ihrer Unterkante über einen demgegenüber weiter zurückliegenden Zwischenbereich in ihrem demgegenüber weiter zurückliegenden Endbereich weitestgehend bündig in einen Nabenabstützungsbereich unterhalb des Kolbenbodens übergehen, läßt es sich jetzt auch herstellungstechnisch realisieren, dass die Neigung des Freibereiches größer 30° beträgt. Daraus resultiert im Übrigen auch, dass die Schrägstellung der Verbindungswände 6 einen Winkel aufweist, der ebenfalls größer 30°, ebenfalls bezogen auf eine Achse parallel zu der Kolbenhubachse beträgt. Diese ist durch die Achse 18, die quasi die Längsachse des Freibereiches 10 darstellt, dargestellt, wobei jetzt in vorteilhafter Weise die Neigung dieser neuen Achse 18 mehr als 30° beträgt bezogen auf die Achse 15 parallel zu der Kolbenhubachse 14.

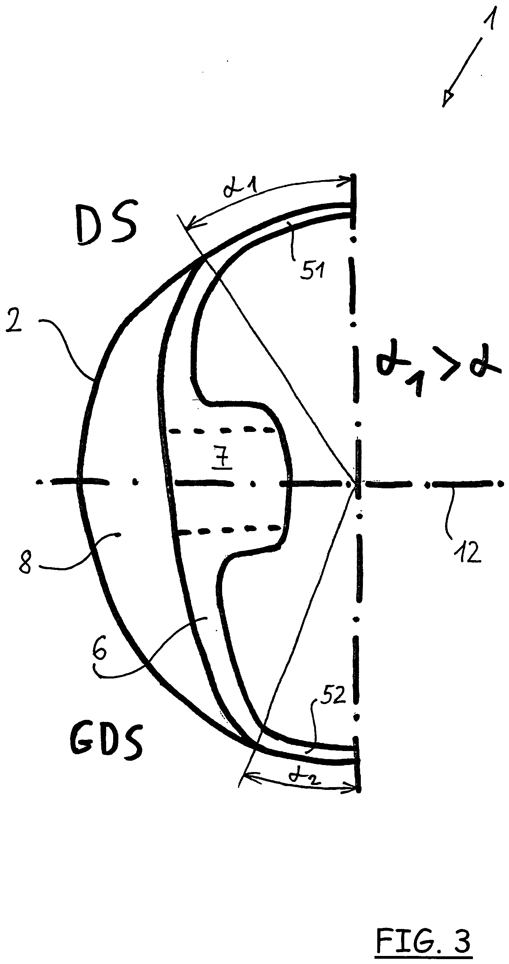

In Figur 3 ist ein Querschnitt durch den Kolben 1 gezeigt, wobei der Bereich des Schaftteiles 4 unterhalb der Unterkante 8 des Kolbenbodens 2 zu erkennen ist. Bei diesem Ausführungsbeispiel sind die tragenden Schaftwandabschnitte 5 in Bezug auf die Bolzenachse 12 derart asymmetrisch ausgebildet, dass der eine Schaftwandabschnitt (hier 51) in seinem radialen Verlauf später in die zurückliegende Verbindungswand 6 übergeht als der ihm gegenüberliegende Schaftwandabschnitt (hier 52). Durch diese Maßnahme ist also der asymmetrische Schaftumschlingungswinkel realisiert, sodass gilt: α₁ > α₂. Die beiden Winkelbereiche α₁ und α₂ werden gemessen ausgehend von einer Achse senkrecht zu der Bolzenachse 12 bis in den Bereich, in dem der tragende Schaftwandabschnitt 5 in die zurückliegende Verbindungswand 6 übergeht.

Die Bezeichnung "DS" in Figur 3 bedeutet Druckseite, d. h., diejenige Schaftseite, die im Verbrennungstakt zur Anlage an den Kolbenzylinder kommt. Die Bezeichnung "GDS" bedeutet dementsprechend Gegendruckseite.

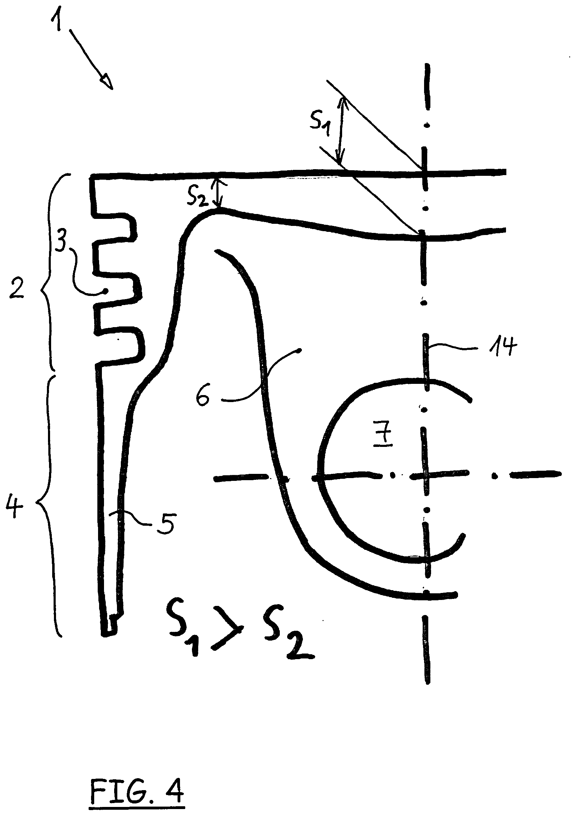

In Figur 4 ist ein Längsschnitt durch den Kolben 1 gezeigt, bei dem die Maßnahme realisiert ist, dass die Dicke des Kolbenbodens 2 aus Richtung einer Kolbenhubachse 14 nach außen verlaufend abnimmt. Bei diesem Ausführungsbeispiel ist die Dicke s₁ des Kolbenbodens 2 im Bereich der Kolbenhubachse 14 am Größten und beim Übergang in den hinter dem Ringfeld 3 liegenden Bereich am Kleinsten, der durch s₂ gekennzeichnet ist. Der Verlauf ist von innen nach außen kontinuierlich abnehmend, wobei die Oberseite des Kolbenbodens 2 im Regelfall planparallel und in einem rechten Winkel zu der Kolbenhubachse 14 angeordnet ist, während die Unterseite des Kolbenbodens 2 stetig abnimmt, sodass gilt: s₁ größer s₂.

Die vorstehend beschriebene Ausgestaltung der Oberseite des Kolbenbodens umfaßt somit den allgemeinen Fall, dass die Oberseite des Kolbenbodens eine beliebige Form haben kann bzw. die Innenseite derart nachgeführt wird, dass die Dicke des Kolbenbodens stetig von innen (Zentrum, in dem sich die Kolbenhubachse befindet) nach außen abnimmt.

Abschließend sei noch darauf hingewiesen, dass die einzelnen, vorstehend genannten erfindungsgemäßen Maßnahmen (Erhöhung der Schrägstellung der Verbindungswände, Vermeidung von Hinterschnitten an der Kolbeninnenform, asymmetrische Schaftumschlingungswinkel, abnehmende Bodendicke in Richtung der Laufflächen, vergrößerter Ringfeldumgusswinkel im Bereich der Gewichtstaschen, asymmetrisch ballige Ausgestaltung der Bolzenbohrung) nicht nur für sich alleine realisiert werden können an einem Kolben, sondern auch teilweise gemeinsam oder allesamt gemeinsam an einem Kolben realisiert werden können. Insgesamt führen diese Maßnahmen alleine oder in Kombination miteinander zu den beschriebenen Vorteilen hinsichtlich Gewichtsreduzierung, Geräuschreduzierung, Dauerfestigkeit, Reibungsreduzierung, Kostenreduzierung und die sich daraus ergebenden Vorteile, wenn der Kolben in der Brennkraftmaschine eingesetzt wird. Hier seien stellvertretend für alle anderen Vorteile die Minimierung des Schadstoffausstoßes und die Reduzierung des Verbrauches der Brennkraftmaschine genannt.

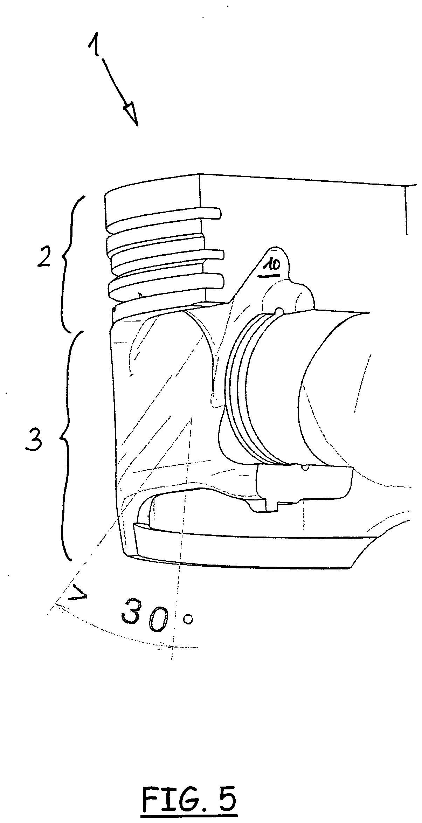

Figur 5 zeigt eine weitere, dreidimensionale Ansicht des erfindungsgemäßen Kolbens 1, aus der wiederum die Neigung der Verbindungswände 6 ersichtlich ist.

### Bezugszeichenliste:

- 1.: Kolben
- 2.: Kolbenboden
- 3.: Ringnut
- 4.: Schaftteil
- 5.: tragender Schaftwandabschnitt
- 6.: zurückliegende Verbindungswand
- 7.: Bolzennabe
- 8.: Unterkante
- 9.: Kolbeninnenbereich
- 10.: Freibereich
- 11.: Begrenzungswand
- 12.: Bolzenachse
- 13.: Nabenabstützungsbereich
- 14.: Kolbenhubachse
- 15.: Achse
- 16.: bekannter Freibereich
- 17.: alte Achse
- 18.: neue Achse

## Patentansprüche

1. Kolben (1) einer Brennkraftmaschine, der einen Kolbenboden (2) mit Ringnuten (3) sowie ein an dem Kolbenboden (2) angeordnetes Schaftteil (4) aufweist, wobei das Schaftteil (4) tragende Schaftwandabschnitte (5) aufweist und die tragenden Schaftwandabschnitte (5) über gegenüber dem Kolbenaußendurchmesser zurückliegende schräg gestellte Verbindungswände (6) miteinander verbunden sind, wobei weiterhin in den Verbindungswänden (6) Bolzennaben (7) zur Aufnahme eines Kolbenbolzens angeordnet sind, wobei die Verbindungswände (6) derart schräg gestellt sind, dass sie im Verlauf von ihrer Unterkante (A) über einen demgegenüber weiter zurückliegenden Zwischenbereich (B) in ihrem demgegenüber weiter zurückliegenden Endbereich (C) weitestgehend bündig oder bündig in einen Nabenabstützungsbereich (13) unterhalb des Kolbenbodens (2) übergehen, **dadurch gekennzeichnet, dass** die Dicke des Kolbenbodens (2) aus Richtung einer Kolbenhubachse (14) nach außen verlaufend abnimmt.

2. Kolben (1) nach Anspruch 1, **dadurch gekennzeichnet, dass** in einem Kolbeninnenbereich (9) keine Hinterschnitte vorhanden sind.

3. Kolben (1) nach Anspruch 1 oder 2, **dadurch gekennzeichnet, dass** die tragenden Schaftwandabschnitte (5) in Bezug auf eine Bolzenachse (12) derart asymmetrisch ausgebildet sind, dass der eine Schaftwandabschnitt (51) in seinem radialen Verlauf später in die zurückliegende Verbindungswand (6) übergeht als der ihm gegenüberliegende Schaftwandabschnitt (52).

4. Kolben (1) nach Anspruch 3, **dadurch gekennzeichnet, dass** die Dicke (s₁) des Kolbenbodens (2) im Bereich der Kolbenhubachse (14) am Größten und die Dicke (s₂) beim Übergang in den hinter dem Ringfeld (3) liegenden Bereich am Kleinsten ist.

5. Kolben (1) nach einem der vorhergehenden Ansprüche, **dadurch gekennzeichnet, dass** hinter dem Ringfeld (3) ein in den Kolbeninnenbereich (9) reichender Freibereich (10) vorgesehen ist.

6. Kolben (1) nach einem der vorhergehenden Ansprüche, **dadurch gekennzeichnet, dass** die Oberfläche der Bolzenbohrung in der Bolzennabe (7) asymmetrisch, insbesondere asymmetrisch ballig ausgeführt ist.

7. Kolben (1) nach einem der vorhergehenden Ansprüche, **dadurch gekennzeichnet, dass** die Neigung des Freibereiches (10) größer 30°, bezogen auf eine Achse parallel zu der Kolbenhubachse, beträgt.

## Claims

1. Piston (1) of an internal combustion engine, comprising a piston crown (2) with ring grooves (3) and a skirt part (4) arranged on the piston crown (2), wherein the skirt part (4) comprises load-bearing skirt wall sections (5) and the load-bearing skirt wall sections (5) connected to one another via connecting walls (6) which are set back at an incline relative to the piston outer diameter, wherein furthermore in the connecting walls (6) pin bosses (7) for receiving a piston pin are arranged, wherein the connecting walls (6) are set at an incline in such a manner that, during the course from their lower edge (A) via an intermediate region (B) set back further compared with this, in their end region (C) set back further compared with this, they largely merge flush or flush into a boss support region (13) below the piston crown (2), **characterized in that** the thickness of the piston crown (2) extending from the direction of a piston stroke axis (14) decreases towards the outside.

2. Piston (1) according to Claim 1, **characterized in that** a piston interior region (9) no undercuts are present.

3. Piston (1) according to Claim 1 or 2, **characterized in that** the load-bearing skirt wall sections (5) are designed asymmetrically with respect to a pin axis (12) in such a manner that the one skirt wall section (51) in it radial course merges into the set-back connecting wall (6) later than the skirt wall section (52) located opposite it.

4. Piston (1) according to Claim 3, **characterized in that** the thickness (s₁) of the piston crown (2) is greatest in the region of the piston stroke axis (14) and the thickness (s₂) is smallest at the transition into the region located behind the annular area (3).

5. Piston (1) according to any one of the preceding claims, **characterized in that** behind the annular area (3) a clearance region (10) reaching into the piston interior region (9) is provided.

6. Piston (1) according to any one of the preceding claims, **characterized in that** the surface of the pin bore in the pin boss (7) is embodied asymmetrically, in particular asymmetrically crowned.

7. Piston (1) according to any one of the preceding claims, **characterized in that** the inclination of the clearance region (10) is greater than 30°, based on an axis that is parallel to the piston stroke axis.

## Revendications

1. Piston (1) pour un moteur à combustion interne, qui présente un fond de piston (2) avec des rainures annulaires (3) ainsi qu'une partie de tige (4) disposée sur le fond de piston (2), la partie de tige (4) présentant des portions de paroi de tige portantes (5) et les portions de paroi de tige portantes (5) étant reliées les unes aux autres par le biais de parois de liaison (6) orientées obliquement et en retrait par rapport au diamètre extérieur du piston, des moyeux de boulon (7) pour recevoir un boulon de piston étant en outre disposés dans les parois de liaison (6), les parois de liaison (6) étant orientées obliquement de telle sorte qu'elles se prolongent, le long de l'étendue de leur arête inférieure (A) sur une région intermédiaire (B) plus en retrait par rapport à celle-ci dans leur région d'extrémité (C) plus en retrait par rapport à celle-ci, essentiellement en affleurement ou en affleurement par une région de support de moyeu (13) en dessous du fond de piston (2), **caractérisé en ce que** l'épaisseur du fond de piston (2) diminue en s'étendant depuis la direction d'un axe de course de piston (14) vers l'extérieur.

2. Piston (1) selon la revendication 1, **caractérisé en ce qu'**aucune contre-dépouille n'est prévue dans une région intérieure du piston (9).

3. Piston (1) selon la revendication 1 ou 2, **caractérisé en ce que** les portions de parois de tige portante (5) sont réalisées de manière asymétrique par rapport à un axe de boulon (12), de telle sorte que l'une des portions de paroi de tige (51) se prolonge par la paroi de liaison en retrait (6) plus tard suivant son étendue radiale que la portion de paroi de tige qui lui est opposée (52).

4. Piston (1) selon la revendication 3, **caractérisé en ce que** l'épaisseur (s₁) du fond de piston (2) est maximale dans la région de l'axe de course de piston (14) et l'épaisseur (s₂) est minimale au niveau de la transition dans la région située derrière le champ annulaire (3).

5. Piston (1) selon l'une quelconque des revendications précédentes, **caractérisé en ce que** derrière le champ annulaire (3) est prévue une zone libre (10) s'étendant dans la région intérieure du piston (9).

6. Piston (1) selon l'une quelconque des revendications précédentes, **caractérisé en ce que** la surface de l'alésage du piston dans le moyeu de piston (7) est réalisée sous forme asymétrique, en particulier sous forme asymétrique bombée.

7. Piston (1) selon l'une quelconque des revendications précédentes, **caractérisé en ce que** l'inclinaison de la région libre (10) est supérieure à 30°, par rapport à un axe parallèle à l'axe de course de piston.
